# EUROPEAN PATENT APPLICATION

(11) **EP 4 834 667 A1**
(43) Date of publication of application: **04.11.2026**
(21) Application number: 24910859.8
(22) Date of filing: 18.12.2024
(51) Int. Cl.: B60R 21/207, B60R 21/233, B60R 21/2338

(54) **SIDE AIRBAG, SEAT SYSTEM AND VEHICLE**

(30) Priority: 29.12.2023 CN 202323658270 U
(71) Applicant: BYD Company Limited, Shenzhen, Guangdong 518118 (CN)
(72) Inventor: JIANG, Hao, Shenzhen, Guangdong 518118 (CN); DU, Qun, Shenzhen, Guangdong 518118 (CN); WANG, Meisong, Shenzhen, Guangdong 518118 (CN); CHENG, Yichun, Shenzhen, Guangdong 518118 (CN); ZHANG, Haian, Shenzhen, Guangdong 518118 (CN)
(74) Representative: Mathys & Squire
(86) International application number: PCT/CN2024/140147
(87) International publication number: WO 2025/139928

(57) **Abstract**

Provided are a side airbag, a seat system, and a vehicle. The side airbag is used in the vehicle, and is folded and mounted on a side of a seat of the vehicle. The side airbag includes an air bag and a gas generator. The air bag includes a first bag surface and a second bag surface, and a periphery of the first bag surface is sealingly connected to a periphery of the second bag surface to form the air bag. The gas generator is disposed on the first bag surface. The gas generator is configured to inflate the air bag to make the air bag expand.

## Description

The present disclosure claims priority to Chinese Patent Application No. 202323658270.5, filed with the China National Intellectual Property Administration on December 29, 2023 and entitled "SIDE AIRBAG, SEAT SYSTEM AND VEHICLE", which is incorporated herein by reference in its entirety.

### TECHNICAL FIELD

The present disclosure relates to the field of side airbag technologies, and in particular, to a side airbag, a seat system, and a vehicle.

### BACKGROUND

With continuous development of vehicles such as automobiles, users have increasingly high requirements for driving safety of the vehicles. Therefore, side airbags that can be stored in a folded state are provided in the vehicles such as automobiles. When a side collision occurs to the vehicle such as the automobile, a side airbag quickly inflates from the folded state to an expanded state. During this process, the side airbag deploys and expands between a driver or a passenger seated on a seat of the vehicle such as the automobile and a side part of a vehicle body, extending from the rear toward the front of the vehicle. As a result, injury to the driver or the passenger during the side collision of the vehicle is reduced by using the deployed and expanded side airbag. However, existing side airbags cannot effectively lift an occupant's arm, failing to provide adequate protection for the driver or the passenger.

### SUMMARY

To address shortcomings existing in the conventional technologies, the present disclosure provides a side airbag that can effectively lift an arm of a driver or a passenger during expansion, a seat system, and a vehicle, to better protect safety of the driver or the passenger after a side collision occurs to the vehicle.

According to one aspect, the present disclosure provides a side airbag for a vehicle, adapted to be folded and mounted on a side of a seat of the vehicle, including:
an air bag including a first bag surface and a second bag surface, and a periphery of the first bag surface being sealingly connected to a periphery of the second bag surface to form the air bag; and
a gas generator disposed on the first bag surface, and the gas generator being configured to inflate the air bag to make the air bag expand.

In a possible implementation, the first bag surface and the second bag surface are symmetrically arranged.

In a possible implementation, the first bag surface and the second bag surface are integrally formed, the second bag surface is folded along a symmetry line relative to the first bag surface, and the gas generator is spaced apart from the symmetry line.

In a possible implementation, an axis of the gas generator is parallel to the symmetry line.

In a possible implementation, a distance between the axis of the gas generator and the symmetry line ranges from 50 to 120 mm.

In a possible implementation, an axis of the gas generator is inclined to the symmetry line.

In a possible implementation, an inclination angle of the axis of the gas generator relative to the symmetry line ranges from 10 - 30°.

In a possible implementation, a distance between an end of the gas generator that is close to the symmetry line and the symmetry line ranges from 0 to 130 mm, and a distance between an end of the gas generator that is away from the symmetry line and the symmetry line ranges from 60 - 190 mm.

In a possible implementation, the first bag surface is provided with an assembly hole, and the gas generator passes through the assembly hole, so that the gas generator is at least partially located in the air bag.

In a possible implementation, the first bag surface is provided with a fixing hole, and the fixing hole is configured to fix the gas generator on the seat.

In a possible implementation, the first bag surface is provided with a fool-proof hole, and the fool-proof hole is an irregularly-shaped hole.

In a possible implementation, the fool-proof hole has different shapes in driver-side and front passenger-side airbags of the vehicle, and the fool-proof hole is used to identify the driver-side and front passenger-side airbags mounted on the vehicle.

In a possible implementation, a straight line defined by the assembly hole and the fool-proof hole is parallel to the axis of the gas generator.

In a possible implementation, the second bag surface has a vent hole.

In a possible implementation, the air bag further includes a stitch, and the periphery of the first bag surface and the periphery of the second bag surface are sewn together by means of the stitch to provide sealing.

In a possible implementation, the side airbag includes a deployed state, a folded state, and an expanded state.

In the deployed state, the first bag surface and the second bag surface are attached together.

In the folded state, the gas generator is exposed to the side airbag.

In the expanded state, at least a portion of the first bag surface is spaced apart from at least a portion of the second bag surface.

According to another aspect, the present disclosure provides a seat system for a vehicle, including:
the side airbag; and
a seat, and a gas generator being mounted on a backrest of the seat.

During expansion of the side airbag, a portion of the air bag is capable of extending from below an arm of a driver or a passenger and lifting the arm of the driver or the passenger, and after the air bag is fully expanded, a portion of the air bag is located in a space below the arm that is enclosed by the arm and chest and abdomen of the driver or the passenger.

In a possible implementation, when the side airbag is in an expanded state, the stitch between the first bag surface and the second bag surface is located in the space below the arm that is enclosed by the arm and chest and abdomen of the driver or the passenger.

According to still another aspect, the present disclosure provides a vehicle including:
the seat system; and
a vehicle body, and the seat being mounted in the vehicle body.

In a possible implementation, the side airbag is mounted on a side of the seat that is close to the vehicle body.

According to the side airbag, seat system, and vehicle provided in the present disclosure, the gas generator is disposed on the air bag, and the gas generator is arranged on the first bag surface. This allows the air bag to extend from below the arm of the driver or the passenger and quickly lift the arm of the driver or the passenger. This helps prevent the arm of the driver or the passenger from compressing a chest cavity or a rib, thereby reducing injury to the chest cavity or the rib caused by the arm of the driver or the passenger due to short reaction time or failure to lift the arm in time. In addition, the air bag can cover chest, abdomen and shoulder areas of the driver or passenger when the air bag is fully deployed and expanded, so that injury caused to the driver or the passenger by components around the driver or the passenger can be reduced.

### BRIEF DESCRIPTION OF DRAWINGS

To describe the technical solutions in embodiments of the present disclosure more clearly, the following briefly describes the accompanying drawings used in embodiments. It is clear that the accompanying drawings in the following descriptions merely show some implementations provided in embodiments of the present disclosure, and a person of ordinary skill in the art can derive other drawings from these accompanying drawings without creative efforts.
FIG. 1 is a partial structural diagram 1 of a vehicle according to an embodiment of the present disclosure;
FIG. 2 is a partial structural diagram 2 of a vehicle according to an embodiment of the present disclosure;
FIG. 3 is a structural diagram 1 of a seat system according to an embodiment of the present disclosure;
FIG. 4 is a structural diagram 2 of a seat system according to an embodiment of the present disclosure;
FIG. 5 is an assembly diagram of a side airbag according to an embodiment of the present disclosure;
FIG. 6 is a structural diagram of an air bag according to an embodiment of the present disclosure;
FIG. 7 is an assembly diagram of an air bag and a gas generator according to an embodiment of the present disclosure;
FIG. 8 is an assembly diagram of an air bag and a gas generator according to another embodiment of the present disclosure;
FIG. 9 is a diagram 1 of a folding process of a side airbag according to an embodiment of the present disclosure; and
FIG. 10 is a diagram 2 of a folding process of a side airbag according to an embodiment of the present disclosure.

### DESCRIPTION OF EMBODIMENTS

The following clearly and completely describes the technical solutions of this application with reference to the accompanying drawings in embodiments of this application. It is clear that the described implementations are merely some but not all of implementations of this application. All other implementations obtained by a person of ordinary skill in the art based on implementations of this application without creative efforts shall fall within the protection scope of this application.

The following descriptions of embodiments are made with reference to the accompanying drawings, and are used to illustrate specific embodiments in which this application can be implemented. The direction terms mentioned in this application, for example, "up", "down", "front", "rear", "left", "right", "inner", "outer", "top surface", "side surface", "bottom surface", "top wall", "side wall", "bottom wall", "inner side wall", "peripheral side wall" are merely directions with reference to the accompanying drawings. Therefore, the direction terms are used to better and more clearly describe and understand this application, instead of indicating or implying that an apparatus or element needs to have a specific orientation and be constructed and operated in a specific orientation, and cannot be understood as limitations on this application. In the descriptions of this application, the terms such as "first," "second," "third," and "fourth" are used merely to distinguish between the described objects, and do not have any sequential or technical meaning. Unless otherwise specified, the "connection" and "linkage" used in the descriptions of this application include both a direct connection (connecting) and an indirect connection (linkage).

With the development of the automotive industry and consumer demand, drivers or passengers have increasingly higher requirements for driving safety of automobiles. Therefore, side airbags that can be stored in a folded state are provided in the automobile. When a side collision occurs to the automobile, the side airbag quickly inflates from the folded state to an expanded state. During this process, the side airbag deploys and expands between the driver or the passenger seated on a seat of the automobile and a side part of a vehicle body, extending from the rear toward the front of the vehicle. As a result, injury to the driver or the passenger during the side collision of the vehicle is reduced by using the deployed and expanded side airbag.

However, an arm of the driver or the passenger is usually hanging down during riding in the automobile. In the related technologies, when a side collision occurs to a vehicle, a side airbag fails to effectively extend under an arm of a driver or a passenger, thus cannot effectively lift the arm of the driver or the passenger. This inevitably causes a high impact force on the arm of the driver or the passenger. In a severe case, this may cause the arm of the driver or the passenger to compress the chest or other body areas of the driver or the passenger, leading to injury, and failing to adequately protect the driver or the passenger.

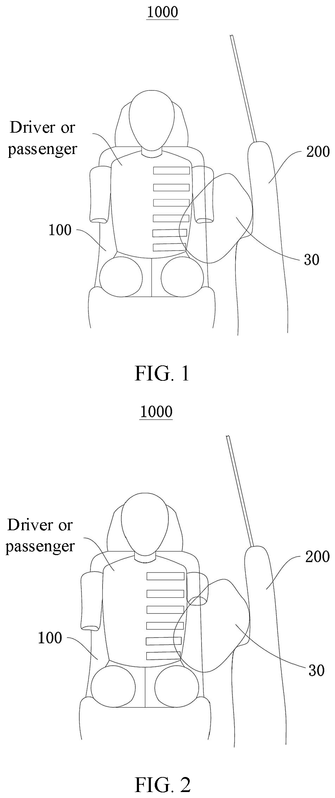

Referring to FIG. 1 and FIG. 2, FIG. 1 is a partial structural diagram 1 of a vehicle according to an embodiment of the present disclosure. FIG. 2 is a partial structural diagram 2 of a vehicle according to an embodiment of the present disclosure.

Based on this, the present disclosure provides a vehicle 1000, and the vehicle 1000 includes a seat system 100 and a vehicle body 200. The seat system 100 is mounted on the vehicle body 200 and is used for a driver or a passenger to sit on.

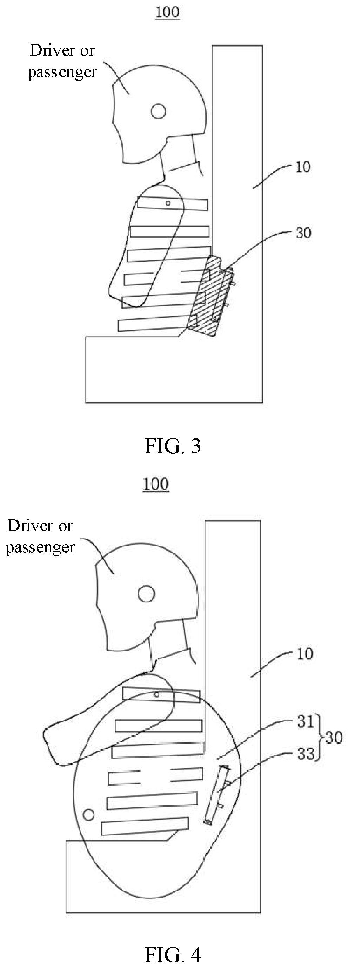

Referring to FIG. 1 to FIG. 4, FIG. 3 is a structural diagram 1 of a seat system according to an embodiment of the present disclosure. FIG. 4 is a structural diagram 2 of a seat system according to an embodiment of the present disclosure.

The present disclosure further provides a seat system 100, and the seat system 100 includes a seat 10 and a side airbag 30. The seat 10 is mounted on the vehicle body 200 and is used for a driver or a passenger to sit on. The side airbag 30 is mounted on a backrest of the seat 10 and is close to a vehicle door of the vehicle body 200. When a side collision occurs to the vehicle 1000, the side airbag 30 quickly inflates from a folded state to an expanded state. During this process, the side airbag 30 deploys and expands between the driver or the passenger seated on the seat 10 of the vehicle 1000 and the vehicle door of the vehicle body 200, extending from a rear-side direction of the seat system 100 toward the direct front of the seat system 100. In addition, a portion of the side airbag 30 can extend from below an arm of the driver or the passenger and lift the arm of the driver or the passenger When the side airbag 30 is fully expanded, a portion of the side airbag 30 is located in a space below the arm that is enclosed by the arm and chest and abdomen of the driver or the passenger. As a result, injury to the driver or the passenger during the side collision of the vehicle 1000 is reduced by using the deployed and expanded side airbag 30.

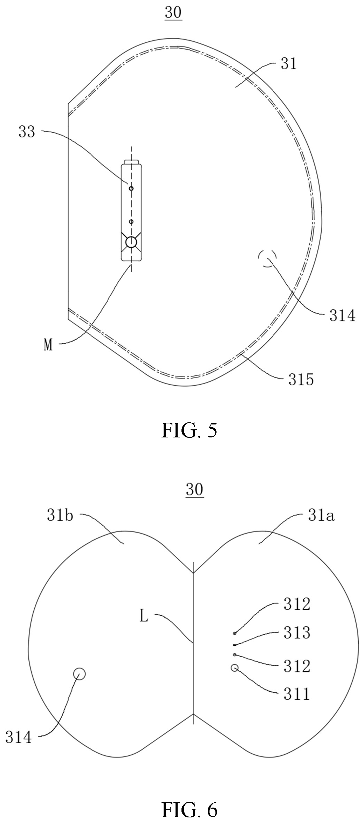

Referring to FIG. 5 and FIG. 6, FIG. 5 is an assembly diagram of a side airbag according to an embodiment of the present disclosure. FIG. 6 is a structural diagram of an air bag according to an embodiment of the present disclosure.

The present disclosure provides a side airbag 30, and the side airbag 30 is configured to be mounted, after being folded, on a side of a seat 10 of a vehicle 1000 that is close to a vehicle door of the vehicle 1000. When a side collision occurs to the vehicle 1000, the side airbag 30 quickly inflates from a folded state to an expanded state. During this process, the side airbag 30 deploys and expands between a driver or a passenger seated on the seat 10 of the vehicle 1000 and the vehicle door of a vehicle body 200, extending from the rear of the vehicle 1000 toward the front of the vehicle 1000. As a result, injury to the driver or the passenger during the side collision of the vehicle 1000 is reduced by using the deployed and expanded side airbag.

In this embodiment, the side airbag 30 includes an air bag 31 and a gas generator 33. The air bag 31 expands after inflation, to provide cushioning protection between the driver or the passenger and the vehicle door of the vehicle 1000. The gas generator 33 is mounted on and connected to the air bag 31, to inflate the air bag 31. The air bag 31 includes a first bag surface 31a and a second bag surface 31b, and a periphery of the first bag surface 31a is sealingly connected to a periphery of the second bag surface 31b to form the air bag 31. The gas generator 33 is arranged on the first bag surface 31a. The gas generator 33 is connected to the air bag 31 and is configured to inflate the air bag 31 to make the air bag 31 expand. The gas generator 33 is disposed on the air bag 31 and is arranged on the first bag surface 31a. That is, the gas generator 33 is spaced apart from a junction between the first bag surface 31a and the second bag surface 31b, so that the gas generator 33 is eccentrically mounted on the air bag 31. During inflation and expansion of the air bag 31, the gas generator 33 is eccentrically mounted on the air bag 31, so that the air bag 31 deploys and expands, and can extend from below the arm of the driver or the passenger and quickly lift the arm of the driver or the passenger. This helps prevent the arm of the driver or the passenger from compressing a chest cavity or a rib, thereby reducing injury to the chest cavity or the rib caused by the arm of the driver or the passenger due to short reaction time or failure to lift the arm in time. In addition, the air bag can cover chest, abdomen and shoulder areas of the driver or passenger when the air bag is fully deployed and expanded, so that injury caused to the driver or the passenger by components around the driver or the passenger can be reduced.

It will be understood that in this embodiment, the gas generator 33 generates a chemical reaction through a chemical substance in the gas generator 33, which ultimately generates a large amount of gas to cause the air bag 31 of the side airbag 30 to deploy and expand. In other embodiments, the gas generator 33 may alternatively be another apparatus capable of generating gas, which is not limited in the present disclosure.

In this embodiment, the air bag 31 of the side airbag 30 lifts the arm of the driver or the passenger during expansion, and lifts the arm away before a force on the chest cavity of the driver or the passenger reaches a risk value. For example: the side collision occurs at 0 ms, the gas generator 33 of the side airbag 30 ignites at 10 ms to generate a large amount of gas and cause the air bag 31 to expand, the arm of the driver or the passenger is fully lifted at about 25 ms, and the chest cavity of the driver or the passenger is compressed to a maximum extent by the air bag 31 of the side airbag 30 at 30 ms to 40 ms.

Referring to FIG. 5 and FIG. 6, in one embodiment, the first bag surface 31a and the second bag surface 31b are symmetrically arranged. In other words, when the first bag surface 31a and the second bag surface 31b do not form the air bag 31, the first bag surface 31a and the second bag surface 31b are symmetrical about a symmetry line L. The first bag surface 31a and the second bag surface 31b are symmetrically arranged, and the gas generator 33 is arranged on the first bag surface 31a. That is, the gas generator 33 is spaced apart from the symmetry line L of the first bag surface 31a and the second bag surface 31b, so that the gas generator 33 is eccentrically mounted on the air bag 31. During the inflation and expansion of the air bag 31, the gas generator 33 is eccentrically mounted on the air bag 31, so that after expansion, the air bag 31 can more effectively extend from below the arm of the driver or the passenger and lift the arm of the driver or the passenger.

It will be understood that in some other embodiments, in order to produce specific lateral expansion effect obtained through deployment and expansion of the air bag 31, the first bag surface 31a and the second bag surface 31b may be an asymmetrical structure. This is not limited in the present disclosure.

Referring to FIG. 5 and FIG. 6, in one embodiment, the first bag surface 31a and the second bag surface 31b are integrally formed. The second bag surface 31b is folded relative to the first bag surface 31a along the symmetry line L, and the gas generator 33 is spaced apart from the symmetry line L, so that a position at which the gas generator 33 inflates the air bag 31 is eccentrically arranged, and further, the air bag 31 expands laterally after deployment and expansion. In this way, gas in the air bag 31 quickly compresses and can be in lap joint with the arm of the driver or the passenger, so that the air bag 31 extends from below the arm of the driver or the passenger and quickly lifts the arm of the driver or the passenger. This helps prevent the arm of the driver or the passenger from compressing the chest cavity or the rib, thereby reducing injury to the chest cavity or the rib caused by the arm of the driver or the passenger due to short reaction time or failure to lift the arm in time.

It will be understood that in some other embodiments, the first bag surface 31a and the second bag surface 31b may be split structures. After the first bag surface 31a and the second bag surface 31b are folded, the periphery of the first bag surface 31a is sealingly connected to the periphery of the second bag surface 31b to form the air bag 31, provided that the gas generator 33 is spaced apart from a sealed junction between the first bag surface 31a and the second bag surface 31b. This is not limited in the present disclosure.

It will be understood that the gas generator 33 of the side airbag 30 is mounted on the backrest of the seat. When the side airbag 30 is in the expanded state, a connecting line between the first bag surface 31a and the second bag surface 31b is partially located in the space below the arm that is enclosed by the arm and chest and abdomen of the driver or the passenger.

Referring to FIG. 1 to FIG. 4, FIG. 5 and FIG. 6, in one embodiment, the first bag surface 31a is provided with an assembly hole 311, the gas generator 33 passes through the assembly hole 311, so that the gas generator 33 is at least partially located in the air bag 31, and gas is generated in the air bag 31 by the gas generator 33 to expand the air bag 31. Specifically, in this embodiment, the assembly hole 311 is a circular hole. It will be understood that in other embodiments, the assembly hole 311 may alternatively be a shape similar to that of the gas generator 33, such as a polygonal hole, an elliptical hole, or the like. This is not limited in the present disclosure.

In some embodiments, the first bag surface 31a is further provided with a fixing hole 312. The fixing hole 312 is used for a fixing screw of the gas generator 33 to pass through, to fix the gas generator 33 on the seat 10 of the vehicle 1000. Specifically, in this embodiment, there are two fixing holes 312. It will be understood that in other embodiments, a quantity of fixing holes 312 may be, but is not limited to, 1, 2, 3, or the like. This is not limited in this application. Specifically, in this embodiment, the fixing hole 312 is a circular hole. It will be understood that in other embodiments, the fixing hole 312 may alternatively be in a shape similar to a shape of a screw of the gas generator 33, such as a polygonal hole, an elliptical hole, or the like. This is not limited in the present disclosure.

In some embodiments, the first bag surface 31a is further provided with a fool-proof hole 313, and the fool-proof hole 313 is an irregularly-shaped hole. The fool-proof hole 313 helps an assembly worker better identify side airbags mounted on a driver seat and a front passenger seat, to avoid incorrect mounting that leads to ineffective protection on the driver or the passenger. Specifically, in this embodiment, for example, a fool-proof hole 313 of a side airbag mounted on the driver seat is a quadrilateral hole, and a fool-proof hole 313 of a side airbag mounted on the front passenger seat may be triangular. It will be understood that in other embodiments, the fool-proof hole 313 may alternatively be an irregularly-shaped hole, such as a pentagonal hole, or an elliptical hole. This is not limited in the present disclosure.

It will be understood that, in this embodiment, the assembly hole 311, the fixing hole 312, and the fool-proof hole 313 may be arranged in a straight line. To be specific, a center of the assembly hole 311, a center of the fixing hole 312, and a center of the fool-proof hole 313 are located on the same straight line, and the straight line formed by the center of the assembly hole 311, the center of the fixing hole 312, and the center of the fool-proof hole 313 is parallel to the axis M of the gas generator 33, so as to facilitate mounting of the gas generator 33 on the first bag surface 31a.

In some embodiments, the second bag surface 31b has a vent hole 314. After the air bag 31 expands and the impact caused by the side collision of the vehicle 1000 is relieved, the vent hole 314 is configured to release gas in the air bag 31, so that the driver or the passenger can exit from the seat 10.

In some embodiments, the air bag 31 further includes a stitch 315, and the periphery of the first bag surface 31a and the periphery of the second bag surface 31b are sewn together through the stitch 315 to provide sealing. The periphery of the first bag surface 31a and the second bag surface 31b are sewn together through the stitch 315 to provide sealing, so that the periphery of the first bag surface 31a is sealingly connected to the periphery of the second bag surface 31b to form the air bag 31 with better stability. When the side airbag 30 is in the expanded state, the stitch 315 between the first bag surface 31a and the second bag surface 31b is located in the space below the arm that is enclosed by the arm and chest and abdomen of the driver or the passenger.

It will be understood that in some other embodiments, the periphery of the first bag surface 31a and the periphery of the second bag surface 31b may be bonded together by using a glue or another adhesive to provide sealing. This is not limited in the present disclosure.

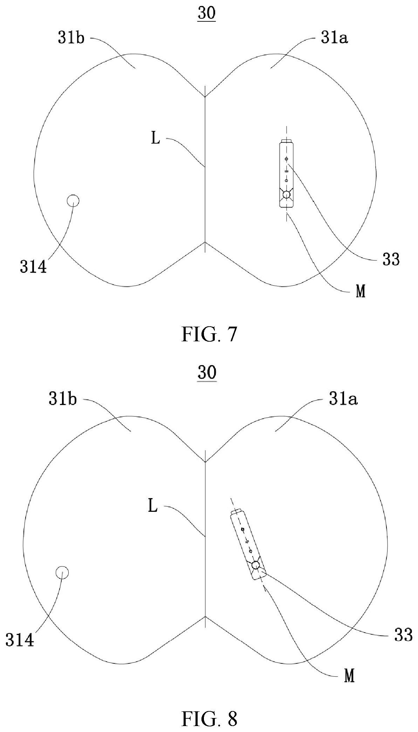

FIG. 7 is an assembly diagram of an air bag and a gas generator according to an embodiment of the present disclosure.

In one embodiment, the gas generator 33 has an axis M, and the axis M of the gas generator 33 is parallel to the symmetry line L of the first bag surface 31a and the second bag surface 31b. The axis M of the gas generator 33 is parallel to the symmetry line L of the first bag surface 31a and the second bag surface 31b, so that the gas generator 33 is parallel to the symmetry line L of the first bag surface 31a and the second bag surface 31b, which facilitates overall folding and mounting of the side airbag 30.

Further, a distance between the axis M of the gas generator 33 and the symmetry line L of the first bag surface 31a and the second bag surface 31b ranges from 50 to 120 mm. For example, the distance between the axis M of the gas generator 33 and the symmetry line L of the first bag surface 31a and the second bag surface 31b is 100 mm. The distance between the axis M of the gas generator 33 and the symmetry line L of the first bag surface 31a and the second bag surface 31b is limited to the range of 50 - 120 mm, to avoid that the side airbag 30 impacts the right abdomen of the driver or the passenger due to the distance between the gas generator 33 and the symmetry line L of the first bag surface 31a and the second bag surface 31b being too short. This can also prevent the side airbag 30 from only lifting a forearm of the driver or the passenger and failing to lift the entire arm of the driver or the passenger due to the distance between the gas generator 33 and the symmetry line L of the first bag surface 31a and the second bag surface 31b being too long.

It will be understood that, based on structure and size arrangement of the vehicle 1000 and the seat system 100, the distance between the axis M of the gas generator 33 and the symmetry line L of the first bag surface 31a and the second bag surface 31b may alternatively be 50 mm, 80 mm, 110 mm, or the like. A designer may set the distance between the axis M of the gas generator 33 and the symmetry line L of the first bag surface 31a and the second bag surface 31b according to a specific requirement. This is not limited in the present disclosure.

FIG. 8 is an assembly diagram of an air bag and a gas generator according to another embodiment of the present disclosure.

In another embodiment, an axis M of the gas generator 33 is inclined to the symmetry line L of the first bag surface 31a and the second bag surface 31b. That is, the gas generator 33 is inclined to the symmetry line L of the first bag surface 31a and the second bag surface 31b. The axis M of the gas generator 33 is inclined to the symmetry line L of the first bag surface 31a and the second bag surface 31b, and the air bag 31 expands laterally after the gas generator 33 inflates the air bag 31, and then expands along a lower part of the arm of the driver or the passenger and lifts the arm of the driver or the passenger, which helps to further improve lifting effect of the side airbag 30 on the arm of the driver or the passenger.

Further, an inclination angle between the axis M of the gas generator 33 and the symmetry line L of the first bag surface 31a and the second bag surface 31b ranges from 10 - 30°. For example, the inclination angle between the axis M of the gas generator 33 and the symmetry line L of the first bag surface 31a and the second bag surface 31b is 20°. The inclination angle between the axis M of the gas generator 33 and the symmetry line L of the first bag surface 31a and the second bag surface 31b is limited to the range of 10 - 30°, to avoid that the lifting effect on the arm of the driver or the passenger is not good due to the inclination angle between the gas generator 33 and the symmetry line L of the first bag surface 31a and the second bag surface 31b being too small or too large.

Further, a distance between an end of the gas generator 33 that is close to the symmetry line L of the first bag surface 31a and the second bag surface 31b and the symmetry line L ranges from 0 - 130 mm, and an end of the gas generator 33 that is away from the symmetry line L of the first bag surface 31a and the second bag surface 31b and the symmetry line L ranges from 60 - 190 mm.

It will be understood that, based on structure and size arrangement of the vehicle 1000 and the seat system 100, the inclination angle between the axis M of the gas generator 33 and the symmetry line L of the first bag surface 31a and the second bag surface 31b may alternatively be 15°, 22°, 25°, or the like. A designer may set the inclination angle between the axis M of the gas generator 33 and the symmetry line L of the first bag surface 31a and the second bag surface 31b according to a specific requirement. This is not limited in the present disclosure.

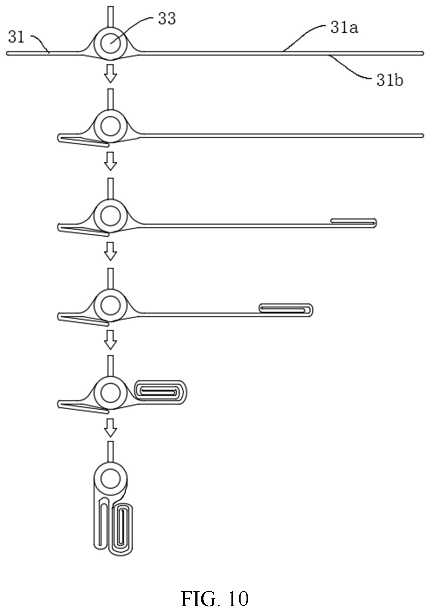

Referring to FIG. 4, FIG. 5, FIG. 9 and FIG. 10, FIG. 9 is a diagram 1 of a folding process of a side airbag according to an embodiment of the present disclosure. FIG. 10 is a diagram 2 of a folding process of a side airbag according to an embodiment of the present disclosure.

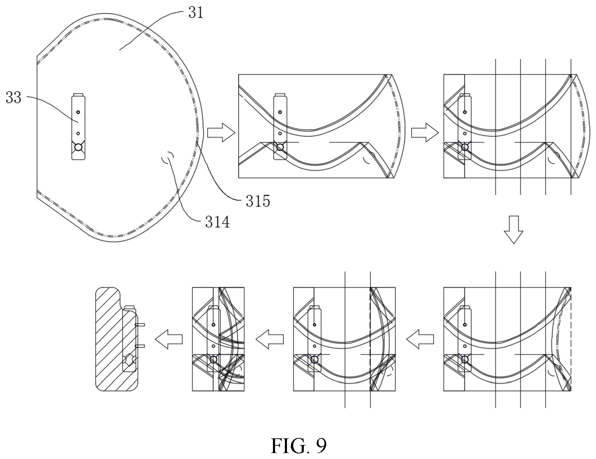

The side airbag 30 includes a deployed state, a folded state, and an expanded state. In the deployed state, the first bag surface 31a and the second bag surface 31b are attached together, and there is no gas in the air bag 31. The side airbag 30 in the deployed state is folded in the folding method shown in FIG. 9 and FIG. 10 to form the folded state. In the folded state, the gas generator 33 is exposed to the side airbag 30, and the side airbag 30 in the folded state is smaller in size, which facilitates mounting of the side airbag 30 on the seat 10. The air bag 31 of the side airbag 30 in the folded state is inflated, to form the expanded state. In the expanded state, at least a portion of the first bag surface 31a is spaced apart from at least a portion of the second bag surface 31b. The side airbag 30 switches from the deployed state to the folded state by folding. When the gas generator 33 inflates the air bag 31, the side airbag 30 switches from the folded state to the expanded state. Due to lateral expansion generated when the side airbag 30 deploys and expands, gas in the air bag 31 quickly compresses and can be in lap contact with the arm of the driver or the passenger, so that the air bag 31 extends from below the arm of the driver or the passenger and quickly lifts the arm of the driver or the passenger. This helps prevent the arm of the driver or the passenger from compressing the chest cavity or the rib, protecting the driver or the passenger.

The foregoing describes some implementations of the present disclosure. It will be noted that a person of ordinary skill in the art may make some improvements and polishing without departing from the principle of the present disclosure and the improvements and polishing shall fall within the protection scope of the present disclosure.

## Claims

1. A side airbag (30) for a vehicle (1000), adapted to be folded and mounted on a side of a seat (10) of the vehicle (1000), comprising:
an air bag (31) comprising a first bag surface (31a) and a second bag surface (31b), and a periphery of the first bag surface (31a) being sealingly connected to a periphery of the second bag surface (31b) to form the air bag (31); and
a gas generator (33) disposed on the first bag surface (31a), and the gas generator (33) being configured to inflate the air bag (31) to make the air bag (31) expand.

2. The side airbag (30) according to claim 1, wherein
the first bag surface (31a) and the second bag surface (31b) are symmetrically arranged.

3. The side airbag (30) according to claim 2, wherein
the first bag surface (31a) and the second bag surface (31b) are integrally formed, the second bag surface (31b) is folded along a symmetry line (L) relative to the first bag surface (31a), and the gas generator (33) is spaced apart from the symmetry line (L).

4. The side airbag (30) according to claim 3, wherein
an axis (M) of the gas generator (33) is parallel to the symmetry line (L).

5. The side airbag (30) according to claim 4, wherein
a distance between the axis (M) of the gas generator (33) and the symmetry line (L) ranges from [50, 120] mm.

6. The side airbag (30) according to claim 3, wherein
an axis (M) of the gas generator (33) is inclined to the symmetry line (L).

7. The side airbag (30) according to claim 6, wherein
an inclination angle of the axis (M) of the gas generator (33) relative to the symmetry line (L) ranges from 10 - 30°.

8. The side airbag (30) according to claim 7, wherein
a distance between an end of the gas generator (33) which is close to the symmetry line (L) and the symmetry line ranges from [0, 130] mm, and a distance between an end of the gas generator which is away from the symmetry line and the symmetry line ranges from 60 - 190 mm.

9. The side airbag (30) according to any one of claims 1 to 8, wherein
the first bag surface (31a) is provided with an assembly hole (311), and the gas generator (33) passes through the assembly hole (311), so that the gas generator (33) is at least partially located in the air bag (31).

10. The side airbag (30) according to any one of claims 1 to 9, wherein
the first bag surface (31a) is provided with a fixing hole (312), and the fixing hole (312) is configured to fix the gas generator (33) on the seat (10).

11. The side airbag (30) according to claim 9, wherein
the first bag surface (31a) is provided with a fool-proof hole (313), and the fool-proof hole (313) is an irregularly-shaped hole.

12. The side airbag (30) according to claim 11, wherein
the fool-proof hole (313) has different shapes in driver-side and front passenger-side airbags (30) of the vehicle (1000), and the fool-proof hole (313) is used to identify the driver-side and front passenger-side airbags (30) mounted on the vehicle (1000).

13. The side airbag (30) according to claim 11 or 12, wherein
a straight line defined by the assembly hole (311) and the fool-proof hole (313) is parallel to the axis (M) of the gas generator (33).

14. The side airbag (30) according to any one of claims 1 to 13, wherein
the second bag surface (31b) has a vent hole (314).

15. The side airbag (30) according to any one of claims 1 to 14, wherein
the air bag (31) further comprises a stitch (315), and the periphery of the first bag surface (31a) and the periphery of the second bag surface (31b) are sewn together through the stitch (315) to provide sealing.

16. The side airbag (30) according to any one of claims 1 to 15, wherein
the side airbag (30) comprises a deployed state, a folded state, and an expanded state;
in the deployed state, the first bag surface (31a) and the second bag surface (31b) are attached together;
in the folded state, the gas generator (33) is exposed to the side airbag (30); and
in the expanded state, at least a portion of the first bag surface (31a) is spaced apart from at least a portion of the second bag surface (31b).

17. A seat system (100) for a vehicle (1000), comprising:
the side airbag (30) according to any one of claims 1 to 16; and
a seat (10), and the gas generator (33) being mounted on a backrest of the seat (10), wherein
during expansion of the side airbag (30), a portion of the air bag (31) is capable of extending from below an arm of a driver or a passenger and lifting the arm of the driver or the passenger, and after the air bag (31) is fully expanded, a portion of the air bag (31) is located in space below the arm that is enclosed by the arm and chest and abdomen of the driver or the passenger.

18. The seat system (100) according to claim 17, wherein
when the side airbag (30) is in an expanded state, the stitch (315) between the first bag surface (31a) and the second bag surface (31b) is located in the space below the arm that is enclosed by the arm and chest and abdomen of the driver or the passenger.

19. A vehicle (1000), comprising:
the seat system (100) according to claim 17 or 18; and
a vehicle body (200), and the seat (10) being mounted in the vehicle body (200).

20. The vehicle (1000) according to claim 19, wherein
the side airbag (30) is mounted on a side of the seat (10) that is close to the vehicle body (200).
